# EUROPEAN PATENT APPLICATION

(11) **EP 4 682 835 A1**
(43) Date of publication of application: **21.01.2026**
(21) Application number: 24774636.5
(22) Date of filing: 04.03.2024
(51) Int. Cl.: G06T 11/80

(54) **IMAGE PROCESSING DEVICE AND IMAGE PROCESSING METHOD**

(30) Priority: 17.03.2023 JP 2023043053
(71) Applicant: FUJIFILM Corporation, Tokyo 106-8620 (JP)
(72) Inventor: OKIYAMA, Kazuya, Saitama-shi, Saitama 331-9624 (JP)
(74) Representative: Meissner Bolte Partnerschaft mbB
(86) International application number: PCT/JP2024/007964
(87) International publication number: WO 2024/195491

(57) **Abstract**

One embodiment according to the technology of the present disclosure provides an image processing apparatus and an image processing method that process an image in a virtual space. An image processing apparatus according to an aspect of the present invention includes a processor; and a memory that stores a program executed by the processor, in which the processor is configured to: by referring to the memory, acquire information on a virtual space including three-dimensional position information; acquire a specific position in the virtual space; acquire evaluation information regarding evaluation of the specific position; determine the evaluation information based on a preset criterion; and change an image at the specific position in the virtual space using a first image, which is an image of a real world corresponding to the specific position, according to a result of the determination.

## Description

### BACKGROUND OF THE INVENTION

### 1. Field of the Invention

The present invention relates to an image processing apparatus and an image processing method that process an image in a virtual space.

### 2. Description of the Related Art

Regarding a technique of processing an image related to a virtual space, for example, JP2022-122810A discloses that virtual content corresponding to a predetermined location in a real world is provided.

### SUMMARY OF THE INVENTION

One embodiment according to the technology of the present disclosure provides an image processing apparatus and an image processing method that process an image in a virtual space.

An image processing apparatus according to a first aspect of the present invention comprises a processor; and a memory that stores a program executed by the processor, in which the processor is configured to: with reference to the memory, acquire information on a virtual space including three-dimensional position information; acquire a specific position in the virtual space; acquire evaluation information regarding evaluation of the specific position; determine the evaluation information based on a preset criterion; and change an image at the specific position in the virtual space using a first image, which is an image of a real world corresponding to the specific position, according to a result of the determination.

According to the first aspect, the image at the specific position in the virtual space is changed by using the first image that is the image of the real world corresponding to the specific position, according to the determination result of the evaluation information. The processor may be configured to allow a user of the image processing apparatus to view the changed image.

In the first aspect and each of the following aspects, the "specific position" is, for example, a location where a user of the image processing apparatus visits and views in a visit location of the virtual space, but may be a location where other users pay attention. The processor may be configured to change the image at the specific position in a case where it is determined that the evaluation information at the specific position satisfies the criterion. Regarding the "evaluation information", the criterion or scale of the evaluation may be one, or may be plural. In addition, the "information on the virtual space" may include three-dimensional position information and may have information on a shape, a color, brightness, a pattern, and the like. Some image may be displayed or mapped in an initial state (before the change of the image).

The image processing apparatus according to the first aspect can be constructed, for example, as a server device on a network, but the present invention is not limited to such an aspect.

In the image processing apparatus according to a second aspect of the present invention, in the first aspect, the processor is configured to change the image at the specific position in the virtual space using the first image in a case where an evaluation value obtained based on the evaluation information is equal to or greater than a threshold value.

In the image processing apparatus according to a third aspect, in the first or second aspect, the processor is configured to perform the determination using, as the criterion, at least one of the number of the first images captured at the specific position, a photographer of the first image at the specific position, the number of positive evaluations for the specific position, a comment of a user of the image processing apparatus for the specific position, or biological information of the photographer associated with the first image at the specific position.

In the image processing apparatus according to a fourth aspect, in any one of the first to third aspects, the processor is configured to select the first image based on a condition designated by a user of the image processing apparatus, or based on a condition decided by the processor.

In the image processing apparatus according to a fifth aspect, in any one of the first to fourth aspects, the processor is configured to specify an imaging location of the image of the real world included in a first image group, and select the first image based on the imaging location. The "imaging location" refers to, for example, a position where a photographer or an imaging device is present in a case where an image of the real world is captured, and includes at least a latitude and a longitude, but may include an altitude. In addition, the imaging location may be represented by a three-dimensional orthogonal coordinate system instead of (latitude, longitude, altitude).

In the image processing apparatus according to a sixth aspect, in the fifth aspect, the processor is configured to specify the imaging location based on at least one of feature extraction using a machine learning method or pattern matching between images.

In the image processing apparatus according to a seventh aspect, in the sixth aspect, the processor is configured to specify, in addition to the imaging location, at least one of an azimuthal angle of imaging, an elevation angle of imaging, or a magnification of imaging, and select the first image from the first image group based on the imaging location and at least one of the azimuthal angle of imaging, the elevation angle of imaging, or the magnification of imaging.

In the image processing apparatus according to an eighth aspect, in any one of the first to seventh aspects, the processor is configured to spatially or temporally continuously change the image of the virtual space corresponding to an imaging range of the first image and the image of the virtual space corresponding to a region outside the imaging range during the change.

In the image processing apparatus according to a ninth aspect, in any one of the first to eighth aspects, the processor is configured to perform the change in response to a predetermined operation or a predetermined action performed by a user of the image processing apparatus.

In the image processing apparatus according to a tenth aspect, in any one of the first to ninth aspects, the processor is configured to adjust a degree of the change according to an attribute of a user of the image processing apparatus.

In the image processing apparatus according to an eleventh aspect, in the tenth aspect, the processor is configured to adjust the degree of the change using one or more of an age, a gender, or a preference of the user as the attribute.

In the image processing apparatus according to a twelfth aspect, in any one of the first to eleventh aspects, the processor is configured to perform the change using an image uploaded to the image processing apparatus by a user of the image processing apparatus as the first image.

In the image processing apparatus according to a thirteenth aspect, in any one of the first to twelfth aspects, the processor is configured to access, via a network, a website that is publicly available, and use an image acquired from the website as the first image for the change.

In the image processing apparatus according to a fourteenth aspect, in any one of the first to thirteenth aspects, the processor is configured to set voice corresponding to the specific position based on voice associated with the first image in a case of the change.

In the image processing apparatus according to a fifteenth aspect, in any one of the first to fourteenth aspects, the processor is configured to present information regarding the specific position to a user of the image processing apparatus.

In the image processing apparatus according to a sixteenth aspect, in the fifteenth aspect, the processor is configured to present to the user, as the information related to the specific position, at least one of a description of a visit candidate location that is a location corresponding to the specific position in the real world, a website that introduces the visit candidate location, a contact information of a travel agency that handles a travel package to the visit candidate location, or a contact information of a retailer that sells a souvenir of the visit candidate location.

In the image processing apparatus according to a seventeenth aspect, in any one of the first to sixteenth aspects, the processor is configured to perform the change using an image obtained by performing image processing on the first image as the first image.

In the image processing apparatus according to an eighteenth aspect, in the seventeenth aspect, the processor is configured to perform the image processing on the first image based on an instruction of a user of the image processing apparatus.

In the image processing apparatus according to a nineteenth aspect, the image processing apparatus according to any one of the first to eighteenth aspects further comprise an image storage device that stores the first image, in which the processor is configured to perform the change based on an image selected from the first image stored in the image storage device.

In the image processing apparatus according to a twentieth aspect, in any one of the first to nineteenth aspects, the processor is configured to specify the specific position based on an output of a sensor that is equipped on a user of the image processing apparatus and that detects a position and a posture of the user.

In the image processing apparatus according to a twenty-first aspect, in any one of the first to twentieth aspects, the processor is configured to display the virtual space on a goggle-type apparatus that is equipped on a user of the image processing apparatus and that includes a display device.

An image processing method according to a twenty-second aspect of the present invention is an image processing method executed by an image processing apparatus that includes a processor and a memory that stores a program executed by the processor, the image processing method including via the processor, by referring to the memory, acquiring information on a virtual space including three-dimensional position information, acquiring a specific position in the virtual space, acquiring evaluation information regarding evaluation of the specific position, determining the evaluation information based on a preset criterion, and changing an image at the specific position in the virtual space using a first image, which is an image of a real world corresponding to the specific position, according to a result of the determination. The image processing method according to the twenty-second aspect may have the same configuration as the second to twenty-first aspects. In addition, an image processing program that causes a computer to execute the image processing method of these aspects, and a non-transitory and tangible recording medium on which a computer-readable code of such an image processing program is recorded can also be included in the aspects of the present invention.

### BRIEF DESCRIPTION OF THE DRAWINGS

Figs. 1A to 1C are conceptual diagrams showing a state in which an image is changed in a virtual space.
Figs. 2A and 2B are conceptual diagrams showing a state in which an image of a part of an object is changed.
Fig. 3 is a diagram showing a configuration of an image processing system according to a first embodiment.
Fig. 4 is a diagram showing a configuration of an image processing server.
Fig. 5 is a diagram showing information recorded in a database.
Fig. 6 is a diagram showing a state in which an image and evaluation information are displayed.
Fig. 7 is a diagram showing a configuration of a user system in the first embodiment.
Fig. 8 is a diagram showing a configuration of goggles.
Fig. 9 is a flowchart (1/2) showing processing of an image processing method in the first embodiment.
Fig. 10 is a flowchart (2/2) showing processing of the image processing method in the first embodiment.
Figs. 11A and 11B are diagrams showing an example of information displayed on a display.
Figs. 12A to 12D are diagrams showing a state in which an image is changed.
Fig. 13 is a diagram showing a display example of information related to a visit location or the like.
Fig. 14 is a flowchart showing a process of acquiring and recording an image.
Figs. 15A to 15C are diagrams showing an example of image processing corresponding to a change in imaging time.

### DESCRIPTION OF THE PREFERRED EMBODIMENTS

### [Sharing of experience and the like using virtual space content]

In recent years, due to the spread of new coronavirus infection, physical travel is restricted, and travel cannot be done as desired. In such a situation, as a countermeasure against a drastic decrease in tourists worldwide, a travel experience in a virtual reality space (Virtual Reality: VR, hereinafter, may be described as a "VR space", a "virtual reality space", or simply a "virtual space") is becoming widespread. However, because the VR space content itself is produced by the platform provider and the experiencers receive a travel-experience service within that space, the experience content becomes exactly the same service regardless of the user. That is, the experience in a case where the user actually visits the content of the VR space is not reflected, and therefore, the charm or value of the VR experience is not sufficient.

Tourism content using VR is provided before a trip, during a trip, and after a trip, and among them, as a purpose of using the content after a trip, "experiencing a visited tourist spot after visiting the tourist spot to stimulate a desire to visit again" and "recommendation to others (sharing of impressions)" are considered (see Non-Patent Literature written below). Therefore, in a case where an experience in a case of actually visiting is reflected in the content of the VR space, it leads to further improvement of the VR experience value (stimulating a desire to visit again, sharing of impressions).

[Non-Patent Literature 1] "Utilization of VR for Advanced Tourism Resources", Prime Minister's Office Tourism Strategy Promotion Task Force (18th), 2018, [searched on March 6, 2023], Internet (https://www.kantei.go.jp/jp/singi/kanko_vision/kankotf_dai18/ siryou5.pdf)

The present inventors have conducted intensive studies in consideration of such circumstances, and have obtained an idea of the present invention. Hereinafter, specific aspects of the present invention (image processing apparatus and image processing method) will be described with reference to the accompanying drawings.

### [First embodiment]

### [Change of image at specific position in virtual space]

In a first embodiment of the present invention, in a case where a virtual reality (VR) space that can be viewed while a VR display device is worn presents an expression modeled on the real world, a priority experience region (priority experience space) in the VR space is specified based on still images/moving images (first images) captured in the real world at the location on which the VR space is based, or on images generated from those images (first images). The specified region and spatial attributes of the VR space, such as color, brightness, and contrast, are then modified based on those data (images).

### [Change of image in virtual space]

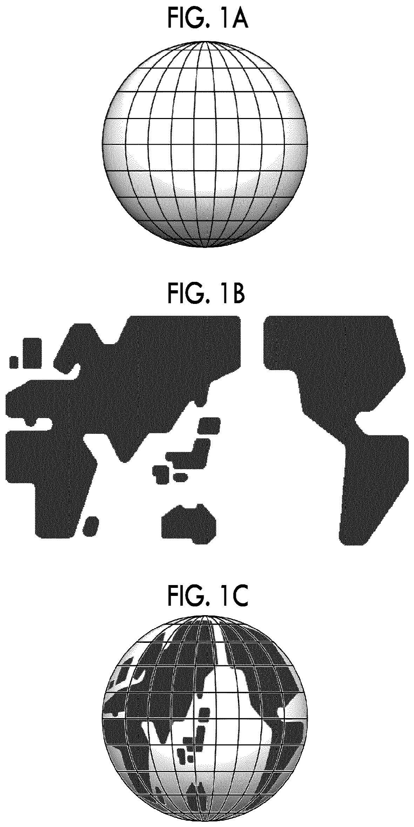

Figs. 1A to 1C are conceptual diagrams showing a state of change in an image in the present invention. As shown in Fig. 1A, the object in the virtual space can be represented by, for example, a three-dimensional polygon, a wireframe, or a surface model. The object in the virtual space may have a color, brightness, and changes (shading, shadow, and the like) thereof in addition to the three-dimensional shape. In addition, the image may be set in the object in an initial state (state before the image is changed) (the texture may be mapped to the three-dimensional model). It should be noted that the object in the virtual space has three-dimensional position information corresponding to the real world.

Fig. 1B shows an image of an image (first image) corresponding to a specific position in the virtual space. In the first embodiment, as will be described in detail later, the image processing server 20 (processor 22) can acquire evaluation information of a specific position in the virtual space and change the image at the specific position in the virtual space using the first image based on a result of determining the evaluation information. Fig. 1C is a diagram showing an example of such a change in the image. In Fig. 1C, an example of mapping the image in Fig. 1B with respect to the three-dimensional object shown in Fig. 1A is shown.

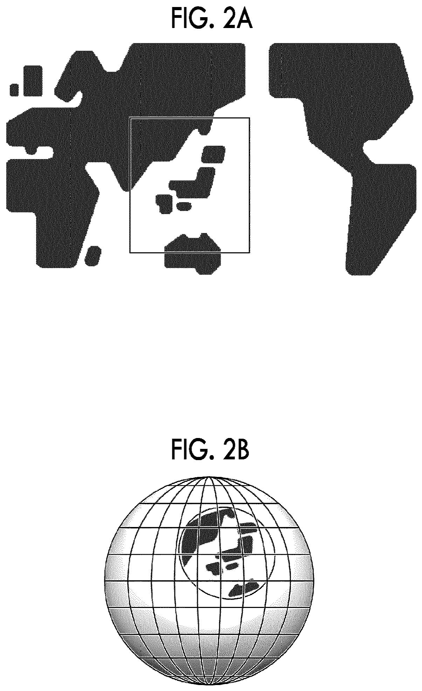

The image captured in the real world may not capture the entire object in the virtual space. Therefore, the image may be changed for a part of the object instead of the entire object based on the image captured in the real world. Figs. 2A and 2B are conceptual diagrams showing a state in which an image of a part of an object is changed. Fig. 2A shows an image (a shown range is narrower than the image shown in Fig. 1B) captured in the real world, and Fig. 2B shows a state in which an image of a part of an object is changed based on the image shown in Fig. 2A (a state in which the image shown in Fig. 2A is mapped to the object). It should be noted that, by changing the image of a part of the object in this way, it is possible to change a processing load as compared with a case where the image of the entire object is changed.

In a case of changing the image, an image subjected to predetermined image processing may be used (described below).

### [Configuration example of image processing system]

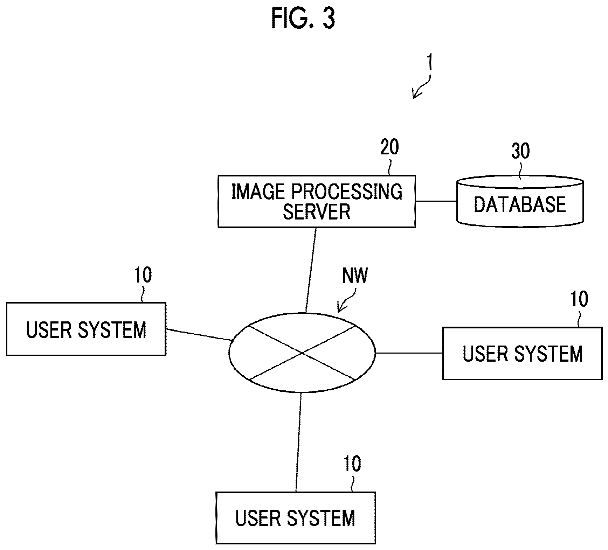

Fig. 3 is a diagram showing a schematic configuration of the image processing system according to the first embodiment. As shown in the drawing, the image processing system 1 comprises a user system 10 (user terminal, VR display device, goggle-type device) and an image processing server 20 (image processing apparatus), and these are connected via a network NW (communication line) such as the Internet or a cloud. The user system 10 may be one, or may be plural. The image processing server 20 can access the database 30 (image storage device).

### [Configuration of image processing server]

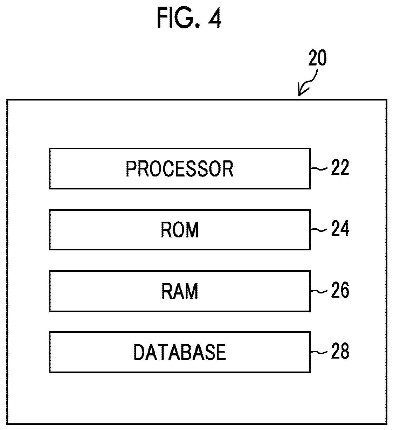

Fig. 4 is a diagram showing a configuration of the image processing server 20 (image processing apparatus). As shown in Fig. 4, the image processing server 20 comprises a processor 22 (processor), a read only memory (ROM) 24 (memory), and a RAM 26, and a database 30 is connected. The processor 22 comprises a virtual space information acquisition unit 22A, a specific position evaluation unit 22B, an evaluation information acquisition unit 22C, an evaluation information determination unit 22D, an image change unit 22E, and an output control unit 22F. The image processing server 20 uses the processor 22 to manage a position and a shape of an object in the virtual space, a voice in the virtual space, illumination (brightness, saturation, and the like), and changes thereof, and to change an image described below.

The processor 22 is configured by, for example, various processors, such as a central processing unit (CPU), a graphics processing unit (GPU), a field programmable gate array (FPGA), and a programmable logic device (PLD), and electric circuits. In a case where these processors and electric circuits execute software (program), computer-readable codes (for example, various processors and electric circuits constituting the processor and/or combinations thereof) for the executable software are stored in a non-transitory and tangible recording medium, such as the ROM 24, and the computer refers to the software. The software stored in a non-transitory and tangible recording medium includes an image processing program according to the present invention (a program causing a computer to execute the image processing method according to the present invention) and data used in executing the image processing program. The code may be recorded on a non-transitory and tangible recording medium such as a flash ROM or an electronically erasable and programmable read only memory (EEPROM) instead of the ROM 24. The "non-transitory and tangible recording medium" does not include a non-tangible recording medium such as a carrier wave signal or a propagation signal itself. The RAM 26 is used as the transitory storage region or a work region during processing using software.

Details of the processing using the processor 22 having the above configuration will be described below.

### [Information recorded in database]

### [Recording of image and related information]

The database 30 comprises various non-transitory and tangible recording media such as magneto-optical recording media and semiconductor recording media, and control devices thereof, and can record and output various information necessary for management and image processing of the virtual space. Therefore, the information on the virtual space including at least three-dimensional position information of the virtual space is recorded in the database 30. It is preferable that the three-dimensional position information of the virtual space is information corresponding to the three-dimensional position information of the real world, and it is preferable that the three-dimensional position can be specified by a set of, for example, a latitude, a longitude, an altitude, or a coordinate (three-dimensional orthogonal coordinates, or the like) equivalent to these. The three-dimensional position information of the virtual space may have information such as a shape, a color, brightness, and a pattern, or may have some image or texture added in an initial state (in a state in which the image described below is not changed). It is preferable that the information on the virtual space is information that imitates the real world in a shape, a color, brightness, and the like, but the information does not have to be strictly the same, and the user of the image processing system 1 may be able to recognize the identity with the real world.

In addition, in the database 30, an image captured in the real world and/or an image obtained by performing image processing on the image captured in the real world are recorded in association with the three-dimensional position. These images are one aspect of a "first image" and a "first image group" in the present invention, and as will be described in detail later, the image at the specific position in the virtual space is changed using the first image. It is preferable that the database 30 records the images in association with related information such as photographer information and a user comment.

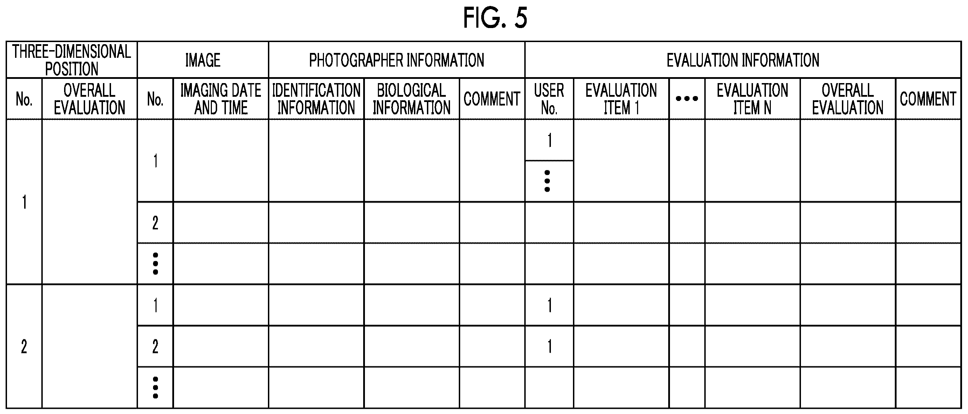

Fig. 5 is a diagram showing an example of an image and related information recorded in the database 30. As shown in Fig. 5, in the database 30, a three-dimensional position of the virtual space, an image of the real world corresponding to the position, photographer information of the image, an evaluation of the image by the user, and the like are recorded in association with each other. The image processing server 20 (processor) can select the first image (image used for changing the image of the real world corresponding to the specific position and the image of the virtual space) with reference to these pieces of information, and can present these pieces of information to the user. The user can perform an operation of selecting the first image with reference to the presented information. Hereinafter, a state in which the information is recorded in association with each other will be described.

### [Association between position and image]

The "three-dimensional position" is three-dimensional position information of the virtual space corresponding to three-dimensional position information of the real world. In Fig. 5, the three-dimensional position is indicated by a number, but it is preferable to associate the number with the three-dimensional coordinates (for example, latitude, longitude, and altitude). In addition, it is also preferable to associate the three-dimensional position with a location name (or a name of a facility, a landmark, or the like). The "overall evaluation" is an evaluation (evaluation value) for the position or the location, and can be calculated, for example, by quantifying and statistically processing one or more pieces of evaluation information (total, weighted total, average, and the like). It should be noted that a plurality of images may be recorded at the first position, and a plurality of pieces of evaluation information may be recorded in one image.

In the example of Fig. 5, the imaging date and time are associated with the image, but the imaging direction (elevation angle, azimuthal angle), the magnification, and the imaging condition (shutter speed, exposure, and the like) may be further associated with the image. The "image of the real world" (first image) may be the captured image itself or an image obtained by performing image processing on the captured image (acquisition of the image will be described later).

### [Photographer information]

The image is associated with information regarding a photographer. The "identification information" is, for example, a name or an ID of the photographer, a nickname, or the like, and an attribute (age, gender, whether a professional or an amateur, and the like) of the photographer may be associated with the identification information. In addition, the "biological information" is, for example, a heart rate, blood pressure, respiration rate, brain waves, or the like of a photographer in a case where the image is captured, and this biological information can be used as a clue for determining "whether or not the person was excited or impressed in a case where the image was captured" or "whether or not the person was in a calm and relaxed mood". The "comment" is, for example, a comment such as "I was impressed!", "It is recommended to view the waterfall from behind", and "It is good to view the scenery on a sunny day" by the photographer, and this comment can be used as a clue for determining "whether or not the target position or location is a highly rated location (or the above-described priority experience region or priority experience space)".

### [Evaluation information]

The evaluation (evaluation information) of the user can be associated with and recorded at the position of the virtual space or the image. The evaluation information may be composed of one item, or may be composed of a plurality of items (N items in the example of Fig. 5) like a vector in a multidimensional feature space. In addition, the plurality of items and the overall evaluation may be included. It is preferable that the evaluation information includes at least one of an evaluation of "the location itself" or an evaluation of the image. Further, the evaluation information may include a comment from the user (for example, "I was also impressed!", "I definitely want to go there!", and the like).

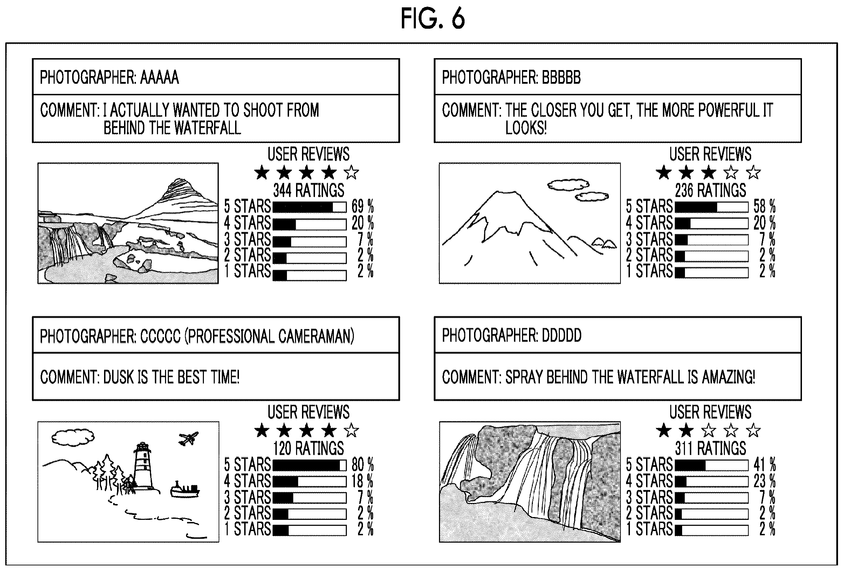

Fig. 6 is a diagram showing a state in which the image and the evaluation information are displayed. In the figure, an image, a photographer, a comment of the photographer, and a result of a user review (in the example of the figure, an overall evaluation and a distribution of evaluations) are shown. The image processing server 20 (processor 22) can select a location (high evaluation location) with a high evaluation based on the evaluation information and display the location as shown in Fig. 6. In a case where the user selects the image (first image) in the state of Fig. 6, the image processing server 20 changes the image at the location (specific position) where the image is reflected in the virtual space and presents the image to the user (displays the image on the display 204 of the goggles 200), as will be described in detail later. In the image processing system 1, the image processing server 20 presents the image and the evaluation information to the user, thereby sharing the impression and stimulating the desire to visit.

### [Configuration of user system]

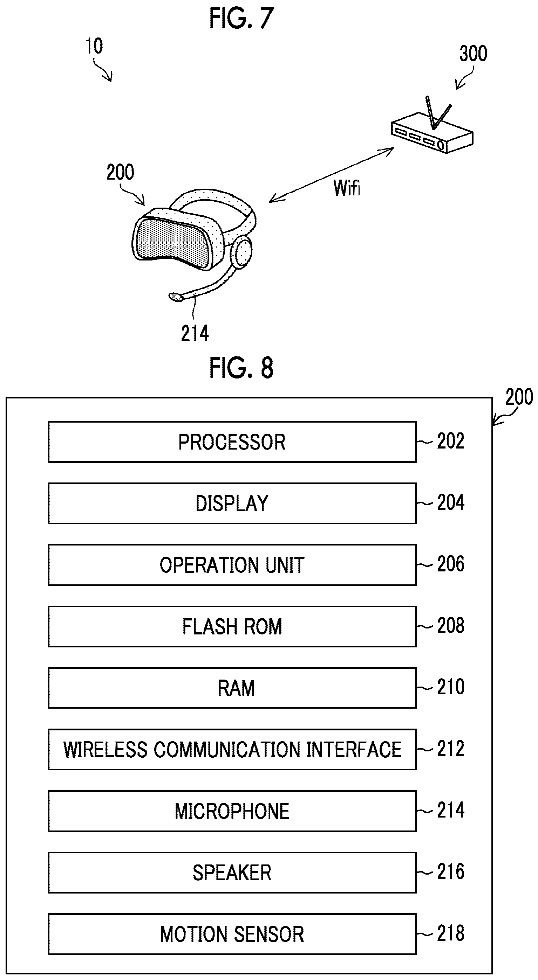

Fig. 7 is a diagram showing a configuration of a user system in the first embodiment. As shown in the drawing, the user system 10 comprises goggles 200 (server connection device, goggles-type device) and a router 300, and the goggles 200 are connected to the network NW via the router 300. The goggles 200 and the router 300 can be connected by wired communication or wireless communication such as Wi-Fi (registered trademark). The user system 10 may have a terminal device such as a smartphone, a tablet terminal, or a personal computer. These terminal devices can be used for uploading images described below.

### [Configuration of goggles]

Fig. 8 is a diagram showing a configuration of the goggles 200. As shown in the drawing, the goggles 200 comprise a processor 202, a display 204, an operation unit 206, a flash ROM 208, a RAM 210, a wireless communication interface 212, a microphone 214, and a speaker 216, and perform communication with the router 300 and the image processing server 20 via the network NW. That is, the goggles 200 can be configured as a virtual reality (VR) goggles-type device that functions as a server connection device and a display device of a virtual space and is worn (equipped) on the head of the user. The goggles 200 may further comprise a memory card and/or a motion sensor (an acceleration sensor, an angular velocity sensor, or the like). In addition, the user system 10 may comprise a motion sensor that is separate from the goggles 200. These motion sensors can be equipped on, for example, the head, body, and limbs of the user, and can be used to detect a change in the position or posture of the user.

The processor 202 of the goggles 200 can be configured using a CPU, a GPU, or the like in the same manner as described above for the processor 22 of the image processing server 20, and executes processing such as connection to the image processing server 20 and display of the virtual space. In a case where processing is executed, a program or data stored in the flash ROM 208 can be used, and the RAM 210 can be used as a temporary storage area or a work area. The connection to the image processing server 20 is performed via the wireless communication interface 212. In addition, the user can perform an operation necessary for browsing (visiting) the virtual space via the operation unit 206. The display 204 can display a three-dimensional virtual space, an image, information related to the image, and the like.

In addition, the user can perform an operation by a voice input via the microphone 214 and the speaker 216, listen to sounds in the virtual space, and converse with another user connected to (participating in) the virtual space by the goggles 200. The goggles 200 (processor 202) may output a message to the user via these devices. The processor 202 can perform voice recognition on a voice input via the microphone 214.

### [Flowchart of image processing method]

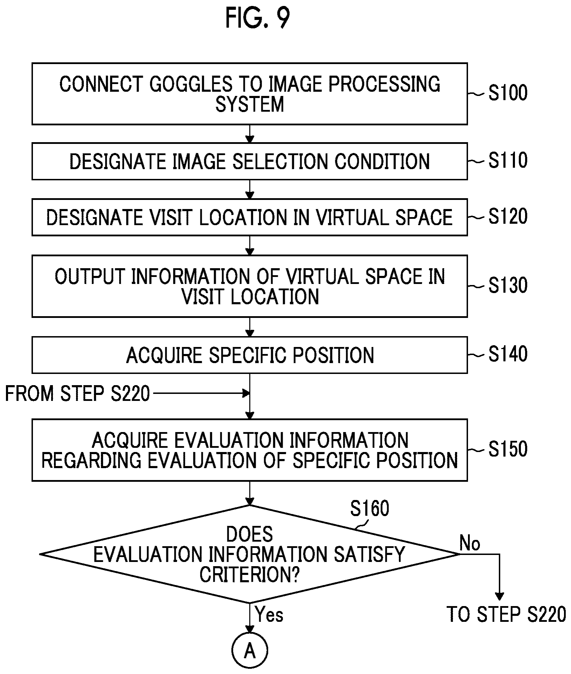

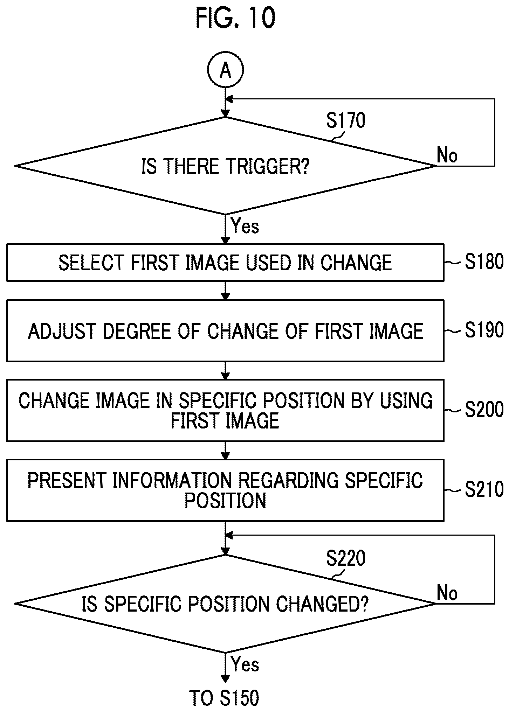

Figs. 9 and 10 are flowcharts showing the processing of the image processing method in the first embodiment.

### [Connection to image processing system]

In a case where the processing is started, the processor 202 sets the goggles 200 in a virtual space connection mode and connects the goggles 200 to the image processing system 1 (image processing server 20) (step S100). The trigger (cause) of the connection may be, for example, detection of an operation on the operation unit 206, detection of a specific motion by the motion sensor 218, recognition of a voice input to the microphone 214 (in this case, it is assumed that the processor 202 of the goggles 200 has a voice recognition function), and the like.

### [Designation of image selection condition]

The processor 22 (processor) designates a condition for selecting the first image by the operation of the user or automatically without the operation of the user (step S110). The operation of the user is, for example, an operation on the operation unit 206 and/or a voice input to the microphone 214. The processor 202 of the goggles 200 can perform voice recognition on the operation content input via the microphone 214 and transmit the result to the image processing server 20.

The selection condition of the first image is, for example, a high user evaluation, a latest image (within 7 days after posting, or the like), an image of a specific season (spring, summer, autumn, and winter) or time zone (morning, daytime, evening, night, or the like), an image of a designated photographer with identification information and/or an attribute, and the like. These conditions may be designated in the middle of the following processing. In addition, the user may designate the conditions in advance or separately on a device (for example, a smartphone or a personal computer) other than the goggles 200, which is connectable to the image processing system 1.

### [Designation of visit location in virtual space]

The processor 22 determines a location that the user visits in the virtual space (acquires a specific position in the virtual space) by the operation of the user or automatically regardless of the operation of the user. The operation of the user may be an operation of inputting a name or keyword (for example, "mountain", "sea", "random", or the like) of a specific location or a landmark, or an operation of selecting a candidate presented from the image processing server 20, and the user can perform an operation on the operation unit 206 and/or an audio input to the microphone 214. In addition, the processor 22 decides the visit location by a method of selecting from a location with a high evaluation by the user based on the evaluation information (see Fig. 5) in the database 30, deciding based on the keyword input by the user, randomly deciding, or the like. The visit location may be designated or changed in the middle of the following processing.

### [Output of information on virtual space]

The processor 22 outputs the information on the virtual space at the designated visit location (step S130). Specifically, the processor 22 transmits a three-dimensional shape, an object, or the like of the designated visit location to the user system 10 and displays the three-dimensional shape, the object, or the like on the display 204 of the goggles 200. As described above, the information on the virtual space is a simulation of the real world, and may have information on color and brightness in addition to the three-dimensional position information and the three-dimensional shape information. The information on the virtual space may include voice information in addition to the visual information. The goggles 200 can output a voice from the speaker 216.

The goggles 200 detect the movement of the user or the change in posture at a predetermined timing by the motion sensor 218, and transmit the detected information to the image processing server 20. The processor 22 of the image processing server 20 outputs information on the virtual space corresponding to the information in response to the reception of the information.

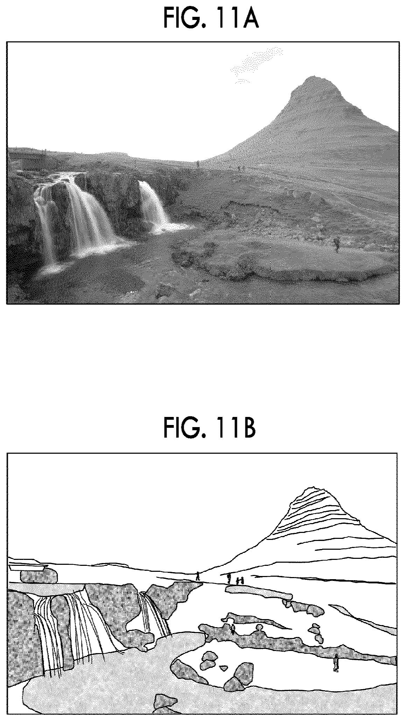

Figs. 11A and 11B are diagrams showing an example of information displayed on the display 204. Fig. 11A shows an image captured in the real world, and Fig. 11B shows a state of a virtual space corresponding to the real world (a state in which "image change" described below is not performed). The information on the virtual space includes three-dimensional position information and a three-dimensional shape, and has a color, brightness, a texture, and the like. In Fig. 11B, the texture of water or a rock surface is expressed by a fill pattern, but images of a rock, soil, water, a tree, grass, and the like may be mapped to a three-dimensional shape.

In a case of displaying the state of the virtual space, the avatar of the user himself/herself or another user may be displayed. In addition, the user may be able to select whether or not to display the avatar. The image processing server 20 can execute processing related to the display of the avatar in the virtual space and the movement of the avatar.

### [Acquisition of specific position and acquisition of evaluation information]

The processor 22 acquires a position (specific position) at which the user is paying attention in the virtual space (step S140). The processor 22 can acquire the specific position based on the three-dimensional position of the visit location and the information (which can be detected by the motion sensor 218) on the posture of the user. Then, the processor 22 acquires the evaluation information related to the evaluation of the specific position with reference to the database 30 (step S150).

### [Determination of evaluation information]

The processor 22 determines whether or not the evaluation information acquired for the specific position satisfies a preset criterion (step S160). The processor 22 can determine that the specific position satisfies the preset criterion in a case where the specific position is, for example, a highly rated location such as a popular tourist spot. Specifically, the processor 22 can determine at least one of the number of images of the first image captured, the number of photographers of the first image, the number of positive evaluations, the comments of the users, or the biological information of the photographer associated with the first image at the specific position as the "preset criterion". In a case where the evaluation information satisfies the criterion, the processing proceeds to step S170, and in a case where the evaluation information does not satisfy the criterion, the processing proceeds to step S220. The processor 22 can use, for example, "the number of images is 100 or more" or "the overall evaluation of the user is 4 or more out of 5 stars (see the example in Fig. 6)" as a criterion.

### [Change of image at specific position]

### [Processing prior to change of image]

The number of images to be captured and the like of the first image described above are examples of evaluation values obtained based on the evaluation information recorded in the database 30, and the processor 22 changes the image at the specific position in the virtual space in a case where the evaluation value is equal to or greater than the threshold value (step S200). The processor 22 can perform the following processing prior to the change of the image.

The processor can change the image in accordance with the detection of the trigger (in a case of Yes in step S170), and can set that the user has performed a predetermined operation or a predetermined motion as the "trigger". The "predetermined operation" or "predetermined motion" can be detected by the operation unit 206, the microphone 214, and the motion sensor 218. It should be noted that the utterance of a specific word or phrase is also included in a predetermined operation or motion.

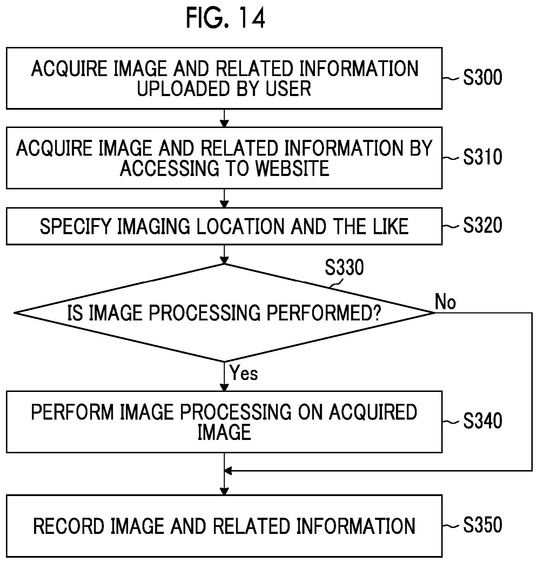

The processor 22 selects the first image based on the above-described condition (step S180). As will be described later (see the description of step S320 in Fig. 14), the processor 22 can specify an imaging location of the image and select the first image based on the specified imaging location.

The processor 22 may perform image processing on the selected first image (step S190). This is because the impression received by the user may differ even for the same image. In addition, the processor 22 may adjust the degree of change or the degree of image processing according to the attribute of the user. Here, the "attribute" is, for example, one or more of the age, gender, and preference of the user. In general, it is known that as the age increases, the spectral sensitivity, particularly the spectral sensitivity to short-wavelength light (light having a wavelength of about 400 nm to 500 nm, violet to blue) decreases (according to JIS S 0031 and the like). For example, in a case where the user is elderly, it is considered to perform image processing that emphasizes violet or blue.

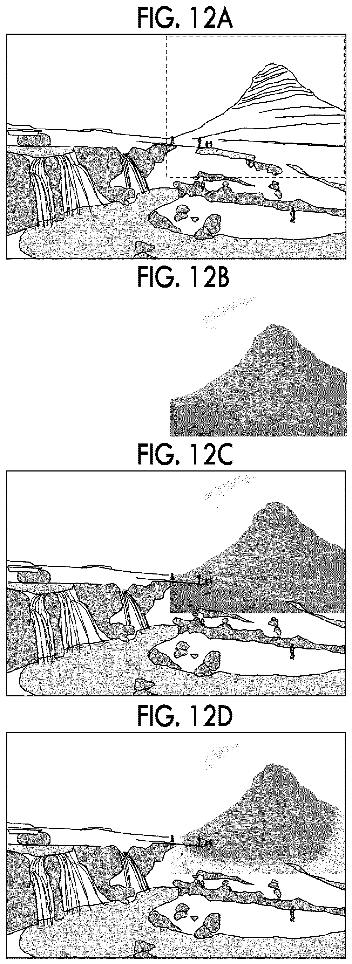

In a case in which the determination and the processing in steps S170 to S190 are ended, the processor 22 changes the image at the specific position in the virtual space using the selected first image (step S200). Figs. 12A to 12D are diagrams showing a state in which the image is changed. Fig. 12A shows a state of the virtual space before the change, a dotted line portion is a region (a location where the user views or pays attention; a specific position) where the image is changed, and Fig. 12B shows the selected first image (image captured in the real world). Fig. 12C shows a state in which the image is changed (assuming a state in which the first image is mapped to the three-dimensional shape of the virtual space). In this example, the "visit location" is a wide range including a waterfall, a flat terrain near the waterfall, and a cliff, and the "specific position" is an upper part of the cliff.

In a case where the above-described change is performed on all regions or a wide range of the virtual space, the processing load is increased, and there is a case where it is practically difficult or impossible to execute. However, according to the first embodiment, even in such a case, the processing load can be reduced while reflecting the state of the real world in the virtual space by changing the image at the specific position.

### [Continuous change of image]

In a case where the above-described change is performed, the user may feel uncomfortable depending on the relationship between the information of the virtual space and the image (first image) used for the change, or the aspect of the change. For example, it is considered that the user feels uncomfortable in a case where the color or the brightness is significantly different between the virtual space and the first image or in a case where the color or the brightness changes discontinuously near the boundary of the changed portion. Therefore, in the first embodiment, in a case of changing the image of the virtual space, the processor 22 can change the image of the virtual space corresponding to the imaging range of the first image and the image of the virtual space corresponding to the region outside the imaging range in a spatially or temporally continuous manner.

Fig. 12D shows an example (one aspect of "spatially continuously changing") in which a region near a boundary where the image is changed between the virtual space and the first image is blurred and smoothly changed. In addition to blurring the image, the brightness or the color may be continuously changed. In addition, the processor 22 may adjust the shape and size of the image as necessary such that the boundaries are smoothly connected.

The above-described "continuous change" may be a "temporally continuous change". For example, it is considered that the processor 22 gradually (over a period with a width) approaches the image of the real world in a temporal manner instead of changing the entire image at once (instantaneously). In this case, the fact that the user faces the specific position may be a trigger for starting the change. In addition, the "continuous change" may be a "continuous change in the voice". For example, it is considered that the processor 22 decreases the volumes of the sound associated with the virtual space and the sound associated with the first image in the vicinity of the boundary of the region where the image is changed.

In a case of changing the image of the virtual space, the processor 22 may display a comment of a photographer of the image (first image) to be used for the change, a comment of another user, evaluation information, and the like.

It should be noted that whether the change is applied and a content of the change may be different for each user. In addition, the "change" may include not only changing the image in the initial state but also newly setting the image in the virtual space in a state in which the image is not set.

### [Input of comment for image]

A user who views the image of the virtual space changed in this way can input a comment on the image. The user can input a comment in a form of, for example, selecting the number of "stars" or a numerical value indicating an evaluation, selecting "like", inputting a sentence, or the like. The user can input a comment via the operation unit 206 or the microphone 214 of the goggles 200. The processor 22 records the input comment in the database 30 in association with the image (first image) at the specific position (corresponding to "comment" in "evaluation information" in Fig. 5).

### [Presentation of information regarding visit location and the like]

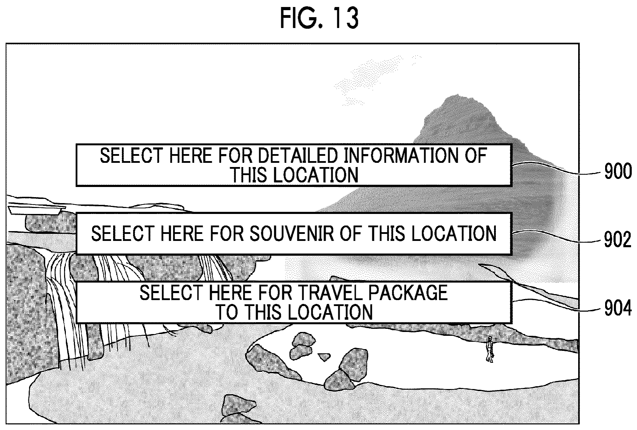

The processor 22 can present information on a location visited by the user or a specific position (hereinafter, referred to as a "visit location or the like") in the virtual space to the user (step S210). Fig. 13 is a diagram showing a display example of such information, and shows a state in which buttons 900 to 904 are displayed in a state in which the above-mentioned change is made (state shown in Fig. 12D). In the example of Fig. 13, the button 900 is linked to a website (for example, a website of a local government, a tourist association, or a facility operator) (contact information) that introduces information such as a geographical feature, history, and climate of a visit candidate location (a location in the real world corresponding to a visit location in the virtual world), the button 902 is linked to a website of a store that sells souvenirs, and the button 904 is linked to a website of a travel agency that handles a travel package to a visit location and the like. By presenting such information, the user can deeply understand the visit location or the like in the virtual space and can have interest or concern about the visit location or the like. Further, it is possible to increase the user's willingness to visit the location (visit candidate location) in the real world.

### [Acquisition and recording of first image]

Acquisition and recording of an image (image captured in real world; first image) used in the above-described change will be described. Fig. 14 is a flowchart showing a process of acquiring and recording an image.

The processor 22 acquires images uploaded to the image processing system 1 by a plurality of users of the image processing system 1 (image processing apparatus) and related information of the images (step S300). The "related information" is, for example, an imaging date and time or photographer information (see Fig. 5). The user can connect a digital camera, a smartphone, a personal computer, or the like to the image processing server 20, for example, via the goggles 200 or the router 300, and upload the image and the related information.

In addition, the processor 22 can access a website, a database, or the like that is available to the public via the network NW and acquire the image and the related information from the website, the database, or the like (step S310). The "website" includes a blog and various social networking services (SNS) or social networking sites. The images acquired in steps S300 and S310 constitute a first image group.

The execution order of steps S300 and S310 may be any order, or these steps may be repeated. In addition, in step S300 and step S310, only one of the steps may be performed by the processor 22. It is assumed that any required permissions or licenses for using the images and related information have already been obtained, or will be obtained separately.

### [Specification of imaging location and the like]

The processor 22 specifies the imaging location of the image of the real world included in the first image group (step S320). The specified imaging location is recorded in the database 30 in association with the image (see the example in Fig. 5), and in step S180 described above, the first image is selected based on the specified imaging location. The processor 22 can specify the imaging location by the latitude and longitude information of each image for an image in the first image group to which the latitude and longitude information (an example of three-dimensional position information) of the imaging location by a positioning system such as a global positioning system (GPS) is attached. In addition, even in the image in which the latitude and longitude information by the GPS or the like is not present, the processor 22 can specify the imaging location by based on at least one of feature extraction using a machine learning method or pattern matching between images. A machine learning method used for specifying the imaging location is not particularly limited, and for example, a neural network such as a convolutional neural network (CNN) or a deep neural network (DNN), or other deep learning algorithms can be used. In addition, a trained model that is trained to output an imaging location in a case where an image is input by providing training data in which the image and the imaging location are paired may be used. In addition, pattern matching may be performed between the image included in the first image group and the image of which the imaging location is known.

It is preferable that the processor 22 specifies at least one of an azimuthal angle of imaging, an elevation angle of imaging, or a magnification of imaging, in addition to the imaging location. In a case where these pieces of information are specified, the processor 22 can select the first image from the first image group based on the imaging location and at least one of the azimuthal angle of the imaging, the elevation angle of the imaging, or the magnification of the imaging (step S180 described above).

### [Image processing on acquired image]

The processor 22 determines whether or not to perform image processing on the acquired image (step S330), and in a case where the determination result is Yes, the processor 22 performs image processing on the acquired image (step S340). This is because, in a case where the image obtained by performing the image processing is different from the image that the photographer has in mind, there is a possibility that an image close to the image that the photographer has in mind is obtained. The content of the image processing is, for example, adjustment of one or more of movement, enlargement or reduction, rotation, focusing degree, noise, color tone, brightness, contrast, and contour of the image, but is not limited to these examples. In addition, the processor 22 may determine the content of the image processing based on an instruction of the user or may determine the content of the image processing without depending on the instruction of the user.

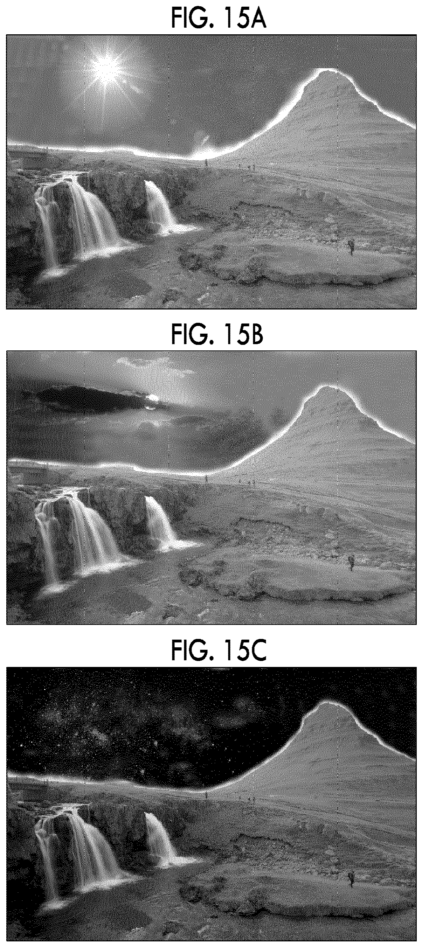

The processor 22 may perform image processing corresponding to the change in the imaging time. The processor 22 can perform such image processing, for example, in a case where the photographer thinks "I actually want to perform imaging at dusk even though I performed imaging in the daytime" or "I want to perform imaging on a sunny day even though I performed imaging on a cloudy day". Figs. 15A to 15C are diagrams showing an example of image processing corresponding to a change in imaging time. It is assumed that the original image is in a state shown in Fig. 11A (captured on a bright but cloudy day).

Figs. 15A to 15C are examples in which image processing is performed to make it look like the images are captured during the daytime on a clear day, at dusk, and at night on a clear day, respectively. In the example shown in Figs. 15A to 15C, image processing of changing the color and the brightness in a blank portion in the image and arranging the object (the bright and shining sun, the setting sun, and stars) is performed, thereby expressing a blue sky, a sunset sky, and a starry sky, and the processor 22 may change the brightness and the color tone of the ground portion in accordance with the virtual imaging time. For example, in a case where it is desired to give an image of dusk, it is considered to make the ground portion or the water surface portion reddish.

The processor 22 can determine whether or not to perform the above-described image processing based on "whether or not the user has instructed the image processing when uploading the image" or "whether or not the comment of the photographer includes the 'original intention of imaging'". In a case of making such a determination, the processor 22 may analyze the comment of the photographer using a machine learning method to estimate the "original intention of imaging". In addition, a method used for the image processing is not particularly limited, and a machine learning method such as generative adversarial networks (GAN) may be used.

In the image processing system 1, the image processing makes it possible to easily share an image conceived by the photographer or the impression of the photographer among the users. In a case where the image processing is performed, the processor 22 can perform the change (step S200) described above with an image obtained by performing the image processing on the original image as the first image.

The processor 22 records the image (the image itself that is acquired or the image that has been subjected to image processing) and the related information in the database 30 in association with each other (step S350). In addition, in a case where the specific position is changed, the processor 22 changes the image according to the change (in a case of Yes in step S220, the process proceeds to step S150). In a case where the visit location is changed, the processor 22 returns to step S130 and repeats the above-described processing.

As described above, with the image processing system 1 according to the first embodiment, the VR experience value can be improved by stimulating the intention to visit or revisit a location in the real world, sharing the impression of a specific location with others, and the like.

### [Modification example]

In the first embodiment described above, the goggles 200 are used for connection to the image processing server 20 and image display, but a device such as a smartphone, a tablet terminal, or a personal computer may be used instead of the goggles-type device. In a case where these devices are used, the sense of immersion in the virtual space is lower than in a case of the goggle-type device, but the user can easily visit the virtual space because the virtual space does not cover the field of view. In addition, since these devices generally have a character input function by a keyboard or a touch panel, it is easy to input comments or the like.

The embodiments and modification examples of the present invention have been described above, but the present invention is not limited to the aspects, and various modifications can be made.

### Explanation of References

1: image processing system
10: user system
20: image processing server
22: processor
30: database
200: goggles
202: processor
204: display
206: operating part
212: wireless communication interface
214: microphone
216: speaker
218: motion sensor
300: router
900: button
902: button
904: button

## Claims

1. An image processing apparatus comprising:
a processor; and
a memory that stores a program executed by the processor,
wherein the processor is configured to:
by referring to the memory,
acquire information on a virtual space including three-dimensional position information;
acquire a specific position in the virtual space;
acquire evaluation information regarding evaluation of the specific position;
determine the evaluation information based on a preset criterion; and
change an image at the specific position in the virtual space using a first image, which is an image of a real world corresponding to the specific position, according to a result of the determination.

2. The image processing apparatus according to claim 1,
wherein the processor is configured to change the image at the specific position in the virtual space using the first image in a case where an evaluation value obtained based on the evaluation information is equal to or greater than a threshold value.

3. The image processing apparatus according to claim 1 or 2,
wherein the processor is configured to perform the determination using, as the criterion, at least one of the number of the first images captured at the specific position, a photographer of the first image at the specific position, the number of positive evaluations for the specific position, a comment of a user of the image processing apparatus for the specific position, or biological information of the photographer associated with the first image at the specific position.

4. The image processing apparatus according to claim 1 or 2,
wherein the processor is configured to select the first image based on a condition designated by a user of the image processing apparatus, or based on a condition decided by the processor.

5. The image processing apparatus according to claim 1 or 2,
wherein the processor is configured to specify an imaging location of the image of the real world included in a first image group, and select the first image based on the imaging location.

6. The image processing apparatus according to claim 5,
wherein the processor is configured to specify the imaging location based on at least one of feature extraction using a machine learning method or pattern matching between images.

7. The image processing apparatus according to claim 6,
wherein the processor is configured to:
specify, in addition to the imaging location, at least one of an azimuthal angle of imaging, an elevation angle of imaging, or a magnification of imaging; and
select the first image from the first image group based on the imaging location and at least one of the azimuthal angle of imaging, the elevation angle of imaging, or the magnification of imaging.

8. The image processing apparatus according to claim 1 or 2,
wherein the processor is configured to spatially or temporally continuously change the image of the virtual space corresponding to an imaging range of the first image and the image of the virtual space corresponding to a region outside the imaging range in the change.

9. The image processing apparatus according to claim 1 or 2,
wherein the processor is configured to perform the change in response to a predetermined operation or a predetermined action performed by a user of the image processing apparatus.

10. The image processing apparatus according to claim 1 or 2,
wherein the processor is configured to adjust a degree of the change according to an attribute of a user of the image processing apparatus.

11. The image processing apparatus according to claim 10,
wherein the processor is configured to adjust the degree of the change using one or more of an age, a gender, or a preference of the user as the attribute.

12. The image processing apparatus according to claim 1 or 2,
wherein the processor is configured to perform the change using an image uploaded to the image processing apparatus by a user of the image processing apparatus as the first image.

13. The image processing apparatus according to claim 1 or 2,
wherein the processor is configured to access, via a network, a website that is publicly available, and use an image acquired from the website as the first image for the change.

14. The image processing apparatus according to claim 1 or 2,
wherein the processor is configured to set voice corresponding to the specific position based on voice associated with the first image in a case of the change.

15. The image processing apparatus according to claim 1 or 2,
wherein the processor is configured to present information regarding the specific position to a user of the image processing apparatus.

16. The image processing apparatus according to claim 15,
wherein the processor is configured to present to the user, as the information related to the specific position, at least one of a description of a visit candidate location that is a location corresponding to the specific position in the real world, a website that introduces the visit candidate location, a contact information of a travel agency that handles a travel package to the visit candidate location, or a contact information of a retailer that sells a souvenir of the visit candidate location.

17. The image processing apparatus according to claim 1 or 2,
wherein the processor is configured to perform the change using an image obtained by performing image processing on the first image as the first image.

18. The image processing apparatus according to claim 17,
wherein the processor is configured to perform the image processing on the first image based on an instruction of a user of the image processing apparatus.

19. The image processing apparatus according to claim 1 or 2, further comprising:
an image storage device that stores the first image,
wherein the processor is configured to perform the change based on an image selected from the first image stored in the image storage device.

20. The image processing apparatus according to claim 1 or 2,
wherein the processor is configured to specify the specific position based on an output of a sensor that is equipped on a user of the image processing apparatus and that detects a position and a posture of the user.

21. The image processing apparatus according to claim 1 or 2,
wherein the processor is configured to display the virtual space on a goggle-type apparatus that is equipped on a user of the image processing apparatus and that includes a display device.

22. An image processing method executed by an image processing apparatus that includes a processor and a memory that stores a program executed by the processor, the image processing method comprising:
via the processor referring to the memory,
acquiring information on a virtual space including three-dimensional position information;
acquiring a specific position in the virtual space;
acquiring evaluation information regarding evaluation of the specific position;
determining the evaluation information based on a preset criterion; and
changing an image at the specific position in the virtual space using a first image, which is an image of a real world corresponding to the specific position, according to a result of the determination.
